# EUROPÄISCHE PATENTSCHRIFT

(11) **EP 1 747 157 B1**
(45) Veröffentlichungstag und Bekanntmachung des Hinweises auf die Patenterteilung: **03.09.2008**
(21) Anmeldenummer: 05729382.1
(22) Anmeldetag: 20.04.2005
(51) Int. Cl.: B65G 51/03

(54) **AUFLAGER MIT TRAGFLÄCHE ZUM BEWEGEN EINER PLATTFORM AUF EINEM LUFTKISSEN**
BEARING PROVIDED WITH A CARRIER SURFACE FOR MOVING A PLATFORM ON AN AIR CUSHION
SUPPORT A SURFACE PORTEUSE CONCU POUR DEPLACER UNE PLATE-FORME SUR UN COUSSIN D'AIR

(30) Priorität: 20.04.2004 RU 2004112138
(43) Veröffentlichungstag der Anmeldung: 31.01.2007
(73) Patentinhaber: Airglide Technologies AG, 8702 Zollikon (CH)
(72) Erfinder: FEDOROV, Viktor, Nalchik, 360032 (RU)
(74) Vertreter: Hengelhaupt, Jürgen
(86) Internationale Anmeldenummer: PCT/CH2005/000219
(87) Internationale Veröffentlichungsnummer: WO 2005/102881

(56) Entgegenhaltungen:
- DE-B- 1 285 400
- US-A- 3 081 886

## Beschreibung

Die Erfindung betrifft die Fördermittel auf einem Luftkissen und ist für die aktive Erholung und sportliche Betätigung von Menschen bei Verwendung von Plattformen auf einem Luftkissen, vorzugsweise ohne Motor, und für das Bewegen der Plattformen auf dem Luftkissen mit Menschen und Lasten in Fußgänger- und Kurzzonen der Städte bestimmt.

Es sind Fördermittel in Form von Geräten auf einem Luftkissen bekannt, die ein Zentrifugalgebläse und einen Kompressor mit einem Kraftantrieb zum Pressen der Luft unter das Gerätegehäuse umfassen [Korytow N.W., Schiffe und Luftkissengeräte, M. , 1964] . Das Gerät mit Gebläse und Kraftantrieb ist frei verschiebbar, allerdings schränken seine große Masse und hohen Kosten sowie der hohe Geräuschpegel seine Verwendung für aktive Erholung und Sport ein.

Es sind Vorrichtungen bekannt, bei denen für die Erzeugung eines Luftkissens das unbewegliche Auflager mit der Tragfläche eine große Anzahl von Öffnungen für den Durchgang der Luft umfasst, die in den Hohlraum innerhalb des Auflagers gepresst wird. Derartige Vorrichtungen werden beispielsweise im Maschinenbau und in den Geräten der Feinmechanik in Form von aerostatischen und gasdynamischen Auflagern für die Sicherstellung einer flachen parallelen Bewegung oder einer Drehbewegung mit geringen Reibungsverlusten angewandt [Pelpor D.S., Gyroskopische Geräte und Autopiloten. M., 1964], Die erwähnten Vorrichtungen werden in Werkzeugmaschinen und Präzisionsgeräte eingebaut und weisen spezifische Konstruktionsmerkmale auf, die ihre Verwendung auf dem technischen Gebiet der Anmeldung verhindern.

Es ist auch eine Vorrichtung bekannt, auf deren Basis das Tischspiel "Airhockey" hergestellt wurde. Diese Vorrichtung umfasst eine Tragfläche in Form eines ganzen Tischchens mit Rändern. Innerhalb des Tischchens wird Luft geblasen. Die Luft tritt durch Öffnungen aus, die gleichmäßig auf der Tischoberfläche angeordnet sind. Dank dessen bildet sich zwischen einer leichten Scheibe, die einen Puck imitiert, und der Tischoberfläche ein dünnes Luftkissen. Aus diesem Grund bewegt sich die Scheibe auf der Tischoberfläche praktisch reibungsfrei, und unterliegt nur einem geringen Luftwiderstand. Der Nachteil der Vorrichtung besteht in einem unverhältnismäßig großen Luftverbrauch für die Verwirklichung eines Luftkisseneffekts.

Der erfinfungsgemäßen Vorrichtung ähnlich ist eine Vorrichtung, die für die Erleichterung der Lastenverschiebung innerhalb von Eisenbahnwaggons und Autos, in Lagern, aber auch für die Beförderung schwerer Karton- und Papierpakete in Unternehmen bestimmt ist. In dieser Vorrichtung wird das Luftkissen zwischen der Lastenunterseite und dem Boden durch die Zufuhr von Druckluft durch Kugelventile, die in der Tragfläche montiert sind, gewährleistet. Unter der Tragfläche ist ein System aus dichten Ventilen, Rohren und Klappen für die Zufuhr der Luft vom Kompressor zu den Kugelventilgruppen, die im Boden montiert sind, vorgesehen. Die Ventile im Boden sind derart angeordnet, dass die Kugeln teilweise auf die Bodenoberfläche austreten. Bei einer direkten mechanischen Einwirkung der sich bewegenden Last auf das bewegliche Element des Ventils, nämlich die Kugel, überwindet diese die Wirkung der Feder und der Druckluft und öffnet einen Ausgang für die Luft in den Raum zwischen dem Boden und der Last [Patent USA 1021040 A, MPK B 60 V 3/04, veröff. 23.02.1966, sowie Patente zu dieser Erfindung in anderen Ländern: US 3235099 (A1), BE 653651 (A), DE 1285400 (B1)]. Diese Vorrichtung kann als Prototyp angesehen werden.

Der Nachteil dieses Prototyps besteht darin, dass es für das Öffnen der Ventile, um Luft für das Luftkissen unter der Last zuzuführen, erforderlich ist, das bewegliche Element des Ventils direkt durch die Last oder die Lastenpalette nach unten zu schieben. Für die in [Patent USA 1021040 A, MPK B 60 V 3/04, veröff. 23.02.1966, sowie Patente zu dieser Erfindung in anderen Ländern: US 3235099 (A1), BE 653651 (A), DE 1285400 (B1)] angeführte Anwendung stellt dies keinen wesentlichen Nachteil dar, da sich die Lasten nur über einige Meter und nur mit geringer Geschwindigkeit bewegen. Allerdings für eine Anwendung einer derartigen technischen Lösung in einem Auflager mit Tragfläche für Plattformen auf einem Luftkissen, die für aktive Erholung und Sport bestimmt ist, ist eine solche Vorrichtung nicht geeignet. Der mechanische Kontakt der Plattform mit einer großen Anzahl von Kugelventilen führt zu einer wesentlichen Erhöhung der Reibungsverluste, verringert die Steuerbarkeit der Plattform und lässt das Gefühl des Schwebens der Plattform auf der Tragfläche verschwinden.

Ergänzend wird noch auf weitere vorbekannte Vorrichtungen verwiesen, die zum Erzeugen von Luftkissen dienen, nämlich die Vorrichtungen gemäß US 3081886 und DE 1285400.

Ziel der vorliegenden Erfindung ist die Herstellung eines Auflagers mit Tragfläche, entlang der sich eine Plattform auf einem Luftkissen, vorzugsweise ohne motor, mit Menschen oder anderen Lasten bei minimalem Energieaufwand für die Aufrechterhaltung des Luftkissens bewegen kann.

Das von der Erfindung angestrebte Ziel wird durch das Auflager gemäß Anspruch 1 erreicht.

Das bewegliche Element des automatischen Ventils ist vorzugsweise in Form eines Differentialkolbens ausgeführt, wobei der Differentialkolben einen Zylinder, einen darin geführten oberen großen Kolben und einen ebenfalls im Zylinder geführten unteren kleinen Kolben aufweist, und wobei der Zylinder auf der einen oberen Seite des großen Kolbens mit der Öffnung an der Oberfläche der Schachtel in Verbindung steht und der Zylinder auf der unteren Seite des kleinen Kolbens mit der Außenluft, die nicht dem Druck des Luftkissens ausgesetzt ist, in Verbindung steht, wobei Öffnungen an der Seitenwand des Zylinders auf der oberen Seite des großen Kolbens vorgesehen sind, die mit dem Innraum der Schachtel in Verbindung stehen.

Der Raum über der Schachtel steht mit dem Innenraum der Schachtel vorzugsweise über Luftdüsen in Verbindung. Die Schachtel des Auflagers ist vorzugsweise aus hohlen Modulen ausgeführt, deren aneinander grenzenden Seitenflächen eine freie Zirkulation der Luft durch den Innenraum gestatten, wobei die Ventile innerhalb der Module derart angeordnet sind, dass sie mit ihrem oberen Teil mechanisch mit der Tragfläche der Schachtel verbunden sind, und der untere Teil der Ventile mechanisch mit dem Boden der Schachtel verbunden ist.

Die Schachtel des Auflagers ist vorzugsweise in Form eines Förderweges mit vorgegebener Ausführung für das Bewegen von Plattformen auf einem Luftkissen mit Menschen und Lasten auf diesem ausgeführt, wobei die Schachtel aus hohlen Modulen oder in Form eines Raumgerüsts ausgeführt ist, das mit einem weichen luftundurchlässigen Material, vorzugsweise einem technischen Gewebe oder einer Polymerfolie, bedeckt ist.

In Figur 1 ist eine Gesamtansicht des Auflagers mit der Tragfläche für die Plattform auf einem Luftkissen mit folgenden Details und Bestandteilen dargestellt: 1 - Tragfläche des Auflagers in Form einer Schachtel, bestehend aus Modulen: 2 - Boden des Auflagers; 3 - Innenraum des Auflagers; 4 - Zentrifugalgebläse; 5 - automatisches Ventil, 6 - Plattform für das Luftkissen. Die Plattform 6 hat in der Regel kein eigenes Gebläse und keinen eigenen Kraftantrieb für die Erzeugung eines Luftkissens.

In Figur 2 ist eine Querschnittansicht des Auflagers mit der Tragfläche mit folgenden Details dargestellt: 7 - Öffnungen in der Seitenwand des automatischen Ventils; 8 - bewegliches Element des Ventils (Kolbens) ; 9 - elastisches Elements (Feder); 10 - Hohlraum unter der Plattform: 11 - Luftdüsen.

In Figur 3 ist ein automatisches Ventil mit den beweglichen Elementen in Form eines Differentialkolbens dargestellt, wobei: 12 und 13 - großer bzw. kleiner Kolbens des Differentialventils; 14 - Ventil für die Durchführung der Luft zum kleinen Kolben; 15 - Feder des Differentialventils.

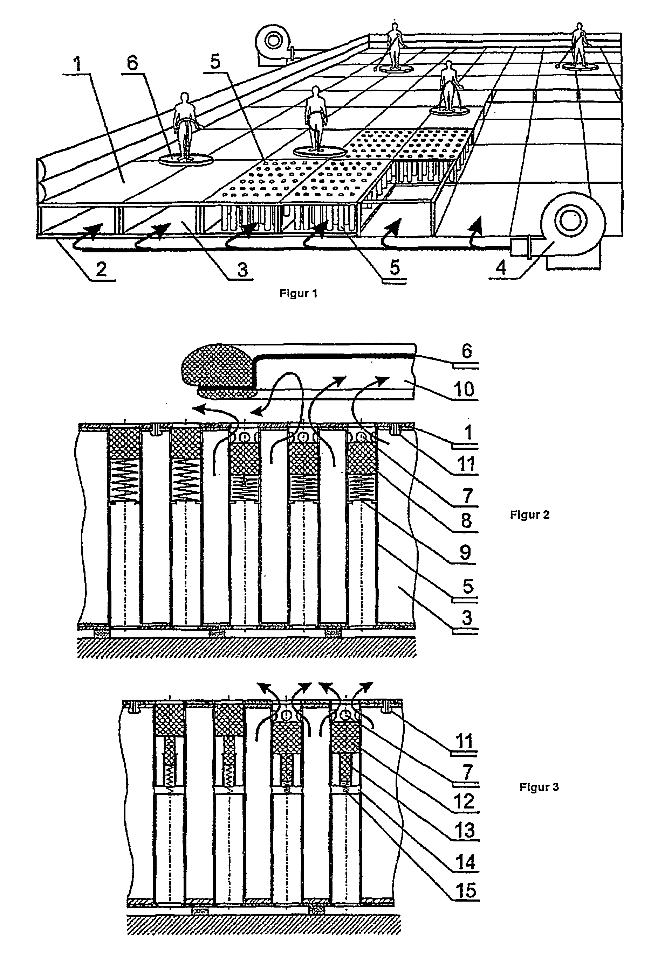

Das Auflager mit der Tragfläche (Figur 1) besteht aus einer Schachtel mit einer äußeren Tragfläche 1, die zu einem Feld verbunden oder in Form eines gezogenen Weges mit vorgegebener Konfiguration befestigt ist. Das Auflager der Tragfläche hat einen Boden 2. Während des Betriebs der Vorrichtung wird in das Innere des Auflagers durch ein Zentrifugalgebläse 4 Luft zugeführt. Dank des Betriebs von automatischen Ventilen 5 tritt die Luft aus dem Innenraum 3 auf die Tragfläche 1 des Auflagers nur an den Stellen aus, an denen sich die Plattform 6 zu dem gegebenen Zeitpunkt befindet. Die Ventilgehäuse 5 verbinden mechanisch die Tragfläche 1 und den Boden 2 des Auflagers. Im Boden können Drainageventile für das Abfließen des Kondensats vorgesehen sein (in den Figuren nicht dargestellt) .

Wie in Figur 2 zu sehen ist, wirkt der Druck des Luftkissens der Plattform auf den Kolben 8 durch die Öffnungen in der Tragfläche 1 ein. Der Kolbendurchmesser 8 und die Eigenschaften der Feder 9 sind derart gewählt, dass die Kraft des Drucks des Luftkissens auf den Kolben immer größer als die Kompressionskraft der Feder ist. Der Kolbens, der die Feder 9 zusammendrückt, senkt sich nach unten und öffnet die Öffnung 7 in der Seitenwand des Ventilkörper. Die Luft tritt durch die Öffnung unter Überdruck aus dem Innenraum 3 des Auflagers auf seine Tragfläche 1 aus und gelangt unter die Plattform 6.

Dank der großen Zahl an offenen Ventilen 5, die sich zu dem gegebenen Zeitpunkt unter dem Einfluss des Drucks des Luftkissens der Plattform befinden, gelangt ein großer Luftstrom aus dem Innenraum des Auflagers unter die Platt- form. Dabei wird ein dynamisches Gleichgewicht zwischen dem Zustrom und dem Verbrauch von Luft von unterhalb der Plattform aufrechterhalten. Es ist offensichtlich, dass die Dicke des Luftkissens von der Produktivität der Zentrifugalgebläse 4 abhängt (Figur 1). Für den Erhalt eines Luftkissens am Start der Plattform steht der Raum über der Schachtel mit dem Innenraum der Schachtel durch Luftdüsen 11 in Verbindung (ihre Bestimmung ist unten beschrieben).

In Figur 3 ist zu sehen, dass in dem automatischen Ventil als elastisches Element auch Luft unter Überdruck verwendet werden kann, die sich im Innenraum der Auflagerfläche befindet. Dazu ist das bewegliche Element des Ventils in Form eines Differentialkolbens ausgeführt, der aus einem großen und einem kleinen Kolben 12 und 13 besteht. Wenn die Plattform über das Ventil gelangt, bewegt der Druck des Luftkissens den Differentialkolben nach unten, wobei er den Druck der Luft auf den kleinen Kolbens 13 und das Entgegenwirken der Feder 15 überwindet. Die Luft wird zum kleinen Kolben 13 des Ventils durch einen Kanal 14 aus dem Innenraum des Auflagers zugeführt. Die Öffnungen 7 öffnen sich, und die Luft aus dem Innenraum des Auflagers tritt unter die Plattform aus. Im Differentialventil hat die Feder 15 eine geringe Steifigkeit, da sie im Wesentlichen für das Schließen des Ventils bei ausgeschalteten Gebläsen bestimmt ist.

So öffnen sich bei einer Bewegung der Plattform die Ventile in der Auflagerfläche vor ihr automatisch unter der Wirkung des Drucks des Luftkissens, und dahinter öffnen sich die Plattformen unter der Wirkung des elastischen Elements, sobald der Druck auf die Auflagerfläche in die Atmosphäre gelangt. Wie aus der vorhergehenden Beschreibung zu sehen ist, öffnen und schließen sich die Ventile automatisch ohne direkten mechanischen Kontakt mit der Plattform.

Die Plattform auf dem Luftkissen kann auf einer horizontalen Tragfläche nur dann umbeweglich stehen, wenn ein genau symmetrisches Ausströmen von Luft entlang des Umfangs der Plattform stattfindet. Dies ist möglich, wenn der Vektor des Massezentrums der Plattform mit der Last und der Vektor des Drucks des Luftkissens auf einer Vertikalachse liegen. Deshalb ist es für eine horizontale Bewegung der Plattform erforderlich, sie in die Richtung der gewünschten Bewegung zu neigen. Die Grosse der Beschleunigung dieser Bewegung hängt von der Masse der Plattform, ihrem Neigungswinkel und der Grosse des Luftdrucks im Luftkissen ab. Gleichzeitig wird der maximale Neigungswinkel der Plattform durch die Dicke des Luftkissens und die Abmessungen der Plattform bestimmt. Auf Basis der bekannten Gleichungen der Aerodynamik der Unterschallströmungen und unter Berücksichtigung von Korrekturkoeffizienten wird die erforderliche Leistung der Zentrifugalgebläse gerechnet, die das Auflager mit der Tragfläche mit Luft versorgen.

Im einfachsten Verwendungsfall der Plattform auf einem Luftkissen ist speziell ein gewisses Ausströmen von Luft durch die Ventile, die auf der Tragfläche des Auflagers angeordnet sind, gestattet. In diesem Fall erfolg das Heben der Plattform auf das Luftkissen bei ihrem Start auf folgende Weise. Wenn zum Startzeitpunkt die Plattform auf der Tragfläche liegt, füllt sich der Hohlraum 10 unter der Plattform (Figur 2) innerhalb einiger Sekunden mit Luft, die durch die undichten Stellen in den geschlossenen Ventilen ausströmt. Allerdings wird das Ausströmen der Luft aus dem Hohlraum 10 durch eine weiche Abdichtung der Plattform am Umfang verhindert. Deshalb ist die Geschwindigkeit des Ausströmens der Luft unterhalb der Plattform geringer als der Zustrom von Luft durch die Schlitze in den Dutzenden Ventilen, die sich in der Tragfläche unter der Plattform befinden.

Bei Erreichen eines gewissen Drucks unter der Plattform werden die automatischen Ventile geöffnet, der Zustrom von Luft unter die Plattform wird erhöht, und die Plattform wird über die Tragfläche gehoben.

Für ein Auflager mit einer großen Tragfläche oder einer großen Ausdehnung ist es allerdings vernünftig, Ventile mit minimalem Ausströmen zu verwenden. Dies ist erforderlich für die Senkung des Energieverbrauchs für die Zufuhr von Luft in das Innere des Auflagers mit Tragfläche. Bei einem geringen Ausströmen von Luft durch die Ventile wird ihre erforderliche Menge für den Start der Plattform durch die Zufuhr von Luft durch geeichte Luftdüsen 11 sicher gestellt (Figur 2), die in der Tragfläche des Auflagers angeordnet sind. Dabei können die Düsen in der Tragfläche auf zwei Arten angebracht werden:
a) für den Start der Plattform werden an beliebigen Stellen Düsen derart angeordnet, dass auf einer Flächeneinheit des Auflagers gleich der Normalprojektion der Luftplattform auf die Tragfläche nicht weniger als eine Düse vorhanden ist,
b) für den Start der Plattform werden nur an den dafür vorgesehenen Stellen der Tragfläche Gruppen von Luftdüsen an den entsprechenden Stellen der Tragfläche angeordnet.

Hinsichtlich des zusätzlichen Energieaufwands für die Zufuhr von Luft in das Innere des Auflagers sind beide Arten der Anordnung der Luftdüsen annehmbar. Dabei ist offensichtlich, dass die zweite Art wirtschaftlicher ist.

Die Ausführung des Auflagers mit einer Tragfläche für Plattformen auf Luftkissen bei gleichzeitiger Verwendung von Gehäusen von automatischen Ventilen als Kraftelemente der Konstruktion, die die Oberfläche des Auflagers und ihren Boden verbinden, verringert den Materialaufwand und die Kosten des Auflagers.

Die Herstellung des Auflagers mit Tragfläche in Form eines Raumgerüsts, das durch ein luftundurchlässiges technisches Gewebe oder lichtbeständige Konstruktionspolymerfolien bedeckt ist, ermöglicht eine Vereinfachung der Beförderung und der Montage des Auflagers mit einer großen Fläche und eine Verringerung des Materialaufwands.

Wie aus den Unterlagen der Anmeldung zu sehen ist, besteht das Auflager mit Tragfläche aus einer kleinen Anzahl von Details, deren Herstellung mit den Methoden der Massenproduktion möglich ist, beispielsweise durch Kunststoffdruckguss, Extrusion mit Druckluftformung, Pressen, usw.

Die Berechnungen bestätigen, dass die Vorrichtung leistungsstark ist und das Ziel der Erfindung erreicht wird.

## Patentansprüche

1. Auflager mit Tragfläche zum Bewegen einer Plattform (6) auf einem Luftkissen, wobei das Auflager in Form einer Schachtel mit einer perforierten Oberfläche (1) für den Austritt der Luft, die in den Innenraum (3) der Schachtel gepresst wird, ausgeführt ist, wobei die Öffnungen in der Oberfläche (1) der Schachtel durch automatische Ventile (5) in Verbindung mit dem Innenraum (3) der Schachtel stehend ausgeführt sind, wobei die Ventile (5) jeweils ein Ventilgehäuse mit einem darin beweglichen Element (8) und einem mit dem beweglichen Element (8) verbundenen elastischen Element (9) aufweisen,
**dadurch gekennzeichnet, dass**
der Hohlraum auf der oberen Seite des beweglichen Elements (8) des Ventils (5) mit der Öffnung auf der Oberseite (1) der Schachtel in Verbindung steht, und der Hohlraum auf der unteren Seite des beweglichen Elements (8) des Ventils (5) mit der Außenluft, die dem Druck des Luftkissens nicht ausgesetzt ist, in Verbindung steht, und wobei Öffnungen (7) an der Seite des Ventilgehäuses vorgesehen sind, die mit dem Innenraum (3) der Schachtel in Verbindung stehen, wobei das bewegliche Element (8) in einer oberen Stellung, in die es vom elastischen Element (9), in Abwesenheit des Luftkissens, gedrückt wird, die Öffnungen (7) des Ventilgehäuses verschließt und weiterhin das bewegliche Element (8) in einer unteren Stellung, in die es durch den Druck des Luftkissens gedrückt wird, die Öffnungen (7) des Ventilgehäuses öffnet.

2. Auflager nach Anspruch 1, **dadurch gekennzeichnet, dass** das bewegliche Element (8) des automatischen Ventils (5) in Form eines Differentialkolbens ausgeführt ist, wobei der Differentialkolben einen Zylinder, einen darin geführten oberen großen Kolben (12) und einen im Zylinder geführten unteren kleinen Kolben (13) aufweist, und wobei der Zylinder auf der oberen Seite des großen Kolbens (12) mit der Öffnung an der Oberfläche (1) der Schachtel in Verbindung steht und der Zylinder auf der unteren Seite des kleinen Kolbens (13) mit der Außenluft, die nicht dem Druck des Luftkissens ausgesetzt ist, in Verbindung steht, wobei Öffnungen (7) an der Seitenwand des Zylinders auf der oberen Seite des großen Kolbens (12) vorgesehen sind, die mit dem Innenraum (3) der Schachtel in Verbindung stehen.

3. Auflager nach Anspruch 1, **dadurch gekennzeichnet, dass** der Raum über der Schachtel mit dem Innenraum (3) der Schachtel durch Luftdüsen (11) in Verbindung steht.

4. Auflager nach Anspruch 1, **dadurch gekennzeichnet, dass** die Schachtel des Auflagers aus hohlen Modulen ausgeführt ist, deren nebeneinander liegenden Seitenflächen eine freie Bewegung der Luft im Innenraum gestatten, wobei die Ventile (5) innerhalb der Module derart angeordnet sind, dass sie mit ihrem oberen Teil mechanisch mit der Tragfläche (1) der Schachtel verbunden sind, und dass der untere Teil der Ventile mechanisch mit dem Boden (2) der Schachtel verbunden ist.

5. Auflager nach Anspruch 1, **dadurch gekennzeichnet, dass** das Auflager in Form eines Förderweges mit vorgegebener Konstruktion für das Bewegen von Plattformen auf einem Luftkissen auf diesem mit Menschen und Lasten ausgeführt ist, wobei die Schachtel aus hohlen Modulen oder in Form eines Raumgerüsts, das mit einem weichen luftundurchlässigen Material ausgeführt ist.

6. Auflager nach Anspruch 5, **dadurch gekennzeichnet, dass** das luftundurchlässige Material ein technisches Gewebe oder eine Polymerfolie ist.

## Claims

1. Bearing provided with a carrier surface for moving a platform (6) on an air cushion, wherein the bearing is embodied in the form of a box having a perforated surface (1) for the discharge of the air which is pressed into the interior space (3) of the box, wherein the openings in the surface (1) of the box are connected to the interior space (3) of the box by automatic valves (5), wherein the valves (5) respectively comprise a valve housing with an element (8) movable therein and with an elastic element (9) connected to the movable element (8),
**characterised in that**
the cavity on the upper side of the movable element (8) of the valve (5) is connected to the opening on the top side (1) of the box, and **in that** the cavity on the lower side of the movable element (8) of the valve (5) is connected to the outside air which is not subj ected to the pressure of the air cushion, wherein openings (7) which are connected to the interior space (3) of the box are provided at the side of the valve housing, wherein the movable element (8) closes the openings (7) of the valve housing in an upper position into which it is pressed by the elastic element (9), in the absence of the air cushion, and wherein the movable element (8) furthermore opens the openings (7) of the valve housing in a lower position, into which it is pressed by the pressure of the air cushion.

2. Bearing according to claim 1, **characterised in that** the movable element (8) of the automatic valve (5) is embodied in the form of a differential piston, wherein the differential piston comprises a cylinder, a large upper piston (12) guided therein, and a small lower piston (13) guided in the cylinder, and wherein the cylinder is connected to the opening at the surface (1) of the box on the upper side of the large piston (12), and wherein the cylinder is connected to the outside air, which is not subjected to the pressure of the air cushion, on the lower side of the small piston (13), wherein openings (7) which are connected to the interior space (3) of the box are provided at the side wall of the cylinder on the upper side of the large piston (12).

3. Bearing according to claim 1, **characterised in that** the space above the box is connected to the interior space (3) of the box by air nozzles (11).

4. Bearing according to claim 1, **characterised in that** the box of the bearing is formed of hollow modules having juxtaposed side surfaces which allow a free movement of the air in the interior space, wherein the valves (5) are disposed within the modules in such a way that they are connected mechanically to the carrier surface (1) of the box by their upper part, and that the lower part of the valves is connected mechanically to the bottom (2) of the box.

5. Bearing according to claim 1, **characterised in that** the bearing is embodied in the form of a conveying path with a predetermined construction for moving platforms on an air cushion with people and loads thereon, wherein the box is made of hollow modules or embodied in the form of a spatial structure with a soft, airtight material.

6. Bearing according to claim 5, **characterised in that** the airtight material is an industrial fabric or a polymeric foil.

## Revendications

1. Support à surface porteuse conçu pour déplacer une plate-forme (6) sur un coussin d'air, le support se présentant sous la forme d'une boîte ayant une surface (1) perforée qui permet d'évacuer l'air injecté dans l'espace (3) intérieur de la boîte, les ouvertures dans la surface (1) de la boîte communiquant avec l'espace (3) intérieur de la boîte par des soupapes (5) automatiques, les soupapes (5) comprenant respectivement un logement de soupape qui comprend un élément (8) pouvant se déplacer dans le logement de soupape et un élément (9) élastique relié à l'élément (8) mobile,
**caractérisé en ce que**
la cavité située sur le côté supérieur de l'élément (8) mobile de la soupape (5) communique avec l'ouverture située sur la face supérieure (1) de la boîte, et que la cavité située sur le côté inférieur de l'élément (8) mobile de la soupape (5) communique avec l'air extérieur qui n'est pas soumis à la pression du coussin d'air, des ouvertures (7) qui communiquent avec l'espace (3) intérieur de la boîte étant prévues sur le côté du logement de soupape, l'élément (8) mobile fermant les ouvertures (7) du logement de soupape en se trouvant dans une position supérieure vers laquelle il est déplacé par l'élément (9) élastique, en l'absence du coussin d'air, et l'élément (8) mobile ouvrant, en outre, les ouvertures (7) du logement de soupape en se trouvant dans une position inférieure vers laquelle il est déplacé par la pression du coussin d'air.

2. Support selon la revendication 1, **caractérisé en ce que** l'élément (8) mobile de la soupape (5) automatique se présente sous la forme d'un piston différentiel, le piston différentiel comprenant un cylindre, un grand piston (12) supérieur guidé dans le cylindre, et un petit piston (13) inférieur guidé dans le cylindre, le cylindre communiquant, sur le côté supérieur du grand piston (12), avec l'ouverture située sur la surface (1) de la boîte, et le cylindre communiquant, sur le côté inférieur du petit piston (13), avec l'air extérieur qui n'est pas soumis à la pression du coussin d'air, et des ouvertures (7) qui communiquent avec l'espace (3) intérieur de la boîte étant prévues au niveau de la paroi latérale du cylindre, sur le côté supérieur du grand piston (12).

3. Support selon la revendication 1, **caractérisé en ce que** l'espace situé au-dessus de la boîte communique avec l'espace (3) intérieur de la boîte par des buses (11) d'air.

4. Support selon la revendication 1, **caractérisé en ce que** la boîte du support est faite de modules creux les surfaces latérales juxtaposées desquels permettent le déplacement libre de l'air dans l'espace intérieur, les soupapes (5) étant disposées à l'intérieur des modules de telle manière qu'elles sont reliées mécaniquement à la surface (1) porteuse de la boîte, par leur partie supérieure, et que la partie inférieure des soupapes est reliée mécaniquement au fond (2) de la boîte.

5. Support selon la revendication 1, **caractérisé en ce que** le support se présente sous la forme d'une voie de transport ayant une construction prédéterminée et étant conçue pour déplacer des plate-formes sur un coussin d'air sur lequel se trouvent des personnes et d'autres charges, la boîte étant faite de modules creux ou se présentant sous la forme d'une structure spatiale avec un matériau souple et étanche à l'air.

6. Support selon la revendication 5, **caractérisé en ce que** le matériau étanche à l'air est un tissu industriel ou un film polymère.
